# EUROPEAN PATENT APPLICATION

(11) **EP 0 690 300 A2**
(43) Date of publication of application: **03.01.1996**
(21) Application number: 95304606.7
(22) Date of filing: 29.06.1995
(51) Int. Cl.: G01M 15/00

(54) **Engine position determining apparatus**

(30) Priority: 02.07.1994 GB 9413346
(71) Applicant: LUCAS INDUSTRIES PUBLIC LIMITED COMPANY, Solihull, West Midlands B91 3TX (GB)
(72) Inventor: Taylor, Michael Joseph, Warwickshire, CV23 8AA (GB)
(74) Representative: Robinson, John Stuart

(57) **Abstract**

An engine position determining apparatus for use in determining the position of a multi-cylinder internal combustion engine within a firing cycle of the engine comprises a crankshaft indicator (2), divided into portions. Each portion of the crankshaft indicator (2) carries a plurality of crankshaft markers which pass a crankshaft position sensor (4). A camshaft indicator (12) is divided into portions each of which carries a plurality of camshaft markers which pass a camshaft position sensor (14). The crankshaft and camshaft markers (2, 12) are substantially uniform in size. The number of crankshaft and camshaft markers within at least two of the portions of the crankshaft indicator (2) and at least two of the portions of the camshaft indicator (12) are different such that there are at least three combinations of crankshaft and camshaft markers during a complete engine firing cycle.

## Description

The present invention relates to an apparatus for determining the position of an internal combustion engine within its firing cycle.

US 4 766 865 discloses an engine position determining device in which toothed wheels are provided on the crank and cam shafts of a four cylinder internal combustion engine. The wheel on the crankshaft is divided into two portions. The portions are identical except that the end of each portion may be indicated by an identifying marker. The wheel on the camshaft is divided into portions having teeth of different widths. In one embodiment, the camshaft wheel is divided into two portions and the two portions of the crankshaft wheel have different identifying markers. In another embodiment, the camshaft wheel is divided into four portions having teeth of four different widths and both portions of the crankshaft wheel are identical. The provision of teeth of enlarged width and/or forming a series of teeth of differing widths adds to complexity in manufacturing and signal processing.

According to the present invention there is provided an engine position determining apparatus for use in determining the position of a multi-cylinder internal combustion engine within a firing cycle of the engine, comprising:
a crankshaft indicator divided into portions, each portion carrying a plurality of crankshaft markers arranged to pass a crank shaft position sensor in a predetermined relationship with respect to cylinder firing events of at least one respective cylinder, each of the markers being of substantially uniform size; and
a camshaft indicator divided into portions, each portion carrying a plurality of camshaft markers arranged to pass a camshaft position sensor in a predetermined relationship with respect to a cylinder firing event of a respective one of the cylinders, each of the markers being of substantially uniform size; the number of crankshaft and camshaft markers within at least two of the portions on the crankshaft and at least two of the portions of the camshaft being different such that there are at least three combinations of crankshaft and camshaft markers during a complete engine fire cycle.

It is thus possible to provide a combination of signals from the camshaft and crankshaft sensors which identifies which cylinder firing event is next.

Preferably the crankshaft and camshaft indicators are toothed wheels mounted on the crankshaft and camshaft, respectively. The number of markers may be changed within each portion of a toothed wheel by omitting one or more teeth from that portion of the toothed wheel.

Preferably the engine is an N cylinder engine where N is an even number of cylinders. Preferably the crankshaft indicator is divided into N/2 crankshaft portions. Advantageously each crankshaft portion carries a different number of crankshaft markers. Preferably each crankshaft portion is separated from its neighbouring portions by at least one missing marker.

Preferably the camshaft indicator is divided into N camshaft portions. Advantageously each camshaft portion is separated from its neighbouring portions by a gap. Advantageously each of the N camshaft portions belongs to either a first group or a second group, the portions within each group being substantially identical with one another, but different from the portions in the other group.

Preferably the markers within each one of the crankshaft portions cooperate to uniquely identify each one of the crankshaft portions. The crankshaft markers provide positional information by virtue of knowing the position of each marker on the crankshaft indicator. The crankshaft markers also indicate which portion is passing the sensor since the number of markers or positions of omitted markers serve to identify which portion of the crankshaft indictor is passing the crankshaft position sensor.

In a preferred embodiment for use with a six cylinder engine, the crankshaft indicator is a toothed wheel mounted for rotation with the crankshaft and divided into first, second and third crankshaft portions carrying first, second and third numbers of teeth, respectively; and the camshaft indicator is a toothed wheel mounted for rotation with the camshaft and divided into first to sixth camshaft portions, each of the first to third camshaft portions carrying a fourth number of teeth and each of the fourth to sixth camshaft portions carrying a fifth number of teeth, such that for each cylinder firing event the combination of the number of teeth counted in a respective portion of the crankshaft indicator and the number of teeth counted in a respective portion of the camshaft indicator uniquely identify which cylinder is to be fired.

Advantageously processing means, responsive to outputs of the sensors, is provided to indicate the position of the engine within its firing cycle. Advantageously the processing means is also arranged to estimate the engine position from the data provided by only one of the sensors. For example, if the camshaft sensor fails, the data from the crankshaft sensor may allow the engine position to be determined to be any of two positions which are one half of a firing cycle apart. These positions can be tested for by attempting to cause an ignition event in one of the next possible two cylinders to fire and determining if ignition takes place. Once the engine position has been established, the position can be accurately tracked by keeping a record of the passage of teeth past the working sensor.

If the crankshaft sensor is lost, the engine position can be uniquely identified once three camshaft portions have passed the camshaft sensor.

The present invention will further be described, by way of example, with reference to the accompanying drawings, in which:
Figure 1 is a block diagram of an apparatus for performing the present invention; and
Figures 2a and 2b are timing diagrams illustrating the operation of the present invention with reference to a six-cylinder engine.

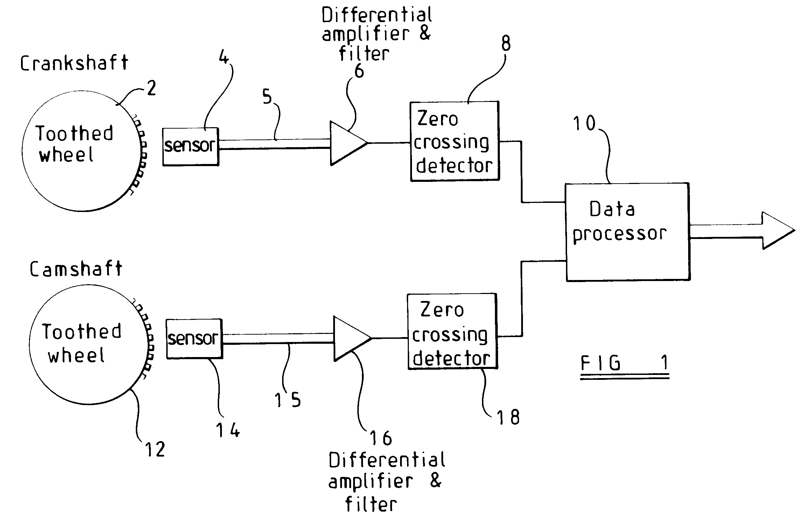

The toothed wheels 2 and 12 shown in Figure 1 are only schematic representations of the wheels and the positions of teeth thereon are not representative of the actual positions of teeth on embodiments of the toothed wheels. The cylinders of the engine are numbered in accordance with their position within an engine firing sequence.

As shown in Figure 1, an engine (not shown) carries a toothed wheel 2 on a crankshaft of the engine. A first sensor 4, such as a variable reluctance transducer, is positioned adjacent the wheel 2 so as to provide an output indicative of the passage of teeth past the sensor 4 as the wheel 2 rotates. An output of the first sensor 4 is conveyed by a first twisted pair 5 to a first differential amplifier and filter 6. The connection between the first twisted pair 5 and the first differential amplifier and filter 6 may include electromagnetic interference suppressing components, such as capacitors, RF chokes and other filter devices. An output of the first differential amplifier and filter 6 is supplied to a first zero crossing detector 8 where the output of the first amplifier and filter 6 is converted into a train of pulses. An output of the first zero crossing detector 8 is supplied to a first input of a data processor 10.

An identical arrangement of a second sensor 14, a second twisted pair 15, a second differential amplifier and filter 16, and a second zero crossing detector 18 are provided to measure the passage of teeth on a toothed wheel 12 fixed for rotation with the camshaft of the engine. An output of the second zero crossing detector is provided to a second input of the data processor 10. The data processor 10 provides an output indicating the position of the engine within its firing cycle and/or provides signals to control fuel injection and/or spark ignition within the engine.

During a complete firing sequence of a 4 stoke engine, the crankshaft makes two revolutions whereas the camshaft makes one revolution. Both the camshaft and the crankshaft carry position sensing arrangements, in the form of the toothed wheels 2 and 12, such that the position of the engine within its firing cycle can be accurately measured. The crankshaft sensor provides an accurate but non-unique indication of the position of the engine within the firing cycle. If only a crankshaft sensor is used, the engine management system has to guess in which one of two possible half cycles the engine is. If only a camshaft sensor is used, then decoding which part of the firing cycle the engine is currently at is relatively easy. However, positional accuracy of the measurement is not sufficient for use with an engine management system as flexing of the mechanical drive to the camshaft may induce errors of at least ±5 degrees. The positional accuracy required for an engine management system for a high performance engine is typically 0.2 degrees. Thus a crankshaft sensor is required.

The operation of the present invention will be described in the context of a six cylinder engine. The toothed wheel 2 on the crankshaft is divided into N/2 portions, i.e. 3 portions when N (the number of cylinders) is equal to 6. The first portion carries seventeen consecutive teeth and passes the sensor 4 during a compression stroke of the first and fourth cylinders. The gaps between the groups of teeth are positioned at a location where positional accuracy is not required, for example, away from the top dead centre (TDC) position. Furthermore, the positions of the teeth may be selected such that an edge of a tooth is detected at or adjacent the TDC position of the associated cylinder. The second portion carries eighteen consecutive teeth and passes the sensor 4 during the compression strokes of the second and fifth cylinders. The third portion carries nineteen consecutive teeth and passes the sensor 4 during the compression strokes of the third and sixth cylinders. The portions are separated from each other by a gap. The teeth are regularly spaced at a separation corresponding to six degrees of rotation of the crankshaft. Thus the first portion is separated from the second portion by a gap corresponding to three missing teeth. The second portion is separated from the third portion by a gap corresponding to two missing teeth; and the third portion is separated from the first portion by a gap corresponding to one missing tooth.

The toothed wheel on the camshaft is divided into N portions, i.e six portions for a six cylinder engine. Each of the first, second and third portions carry nine consecutive teeth and these portions pass the sensor 14 during compression strokes of the first, second and third cylinders, respectively. Each of the fourth, fifth and sixth portions carry eight consecutive teeth and these portions pass the sensor 14 during compression strokes of the fourth, fifth and sixth cylinders, respectively. The teeth are regularly spaced at intervals corresponding to twelve degrees of engine rotation. Thus the gap between the first and second, the second and third, and the third and fourth groups corresponds to one missing tooth, whereas the gap between the fourth and fifth, the fifth and sixth, and the sixth and first groups corresponds to two missing teeth.

The toothed wheels on the crankshaft and camshaft are aligned such that the first tooth of each group on the crankshaft arrives at the sensor 4 at substantially the same time as the first tooth on a corresponding group on the camshaft arrives at the sensor 14.

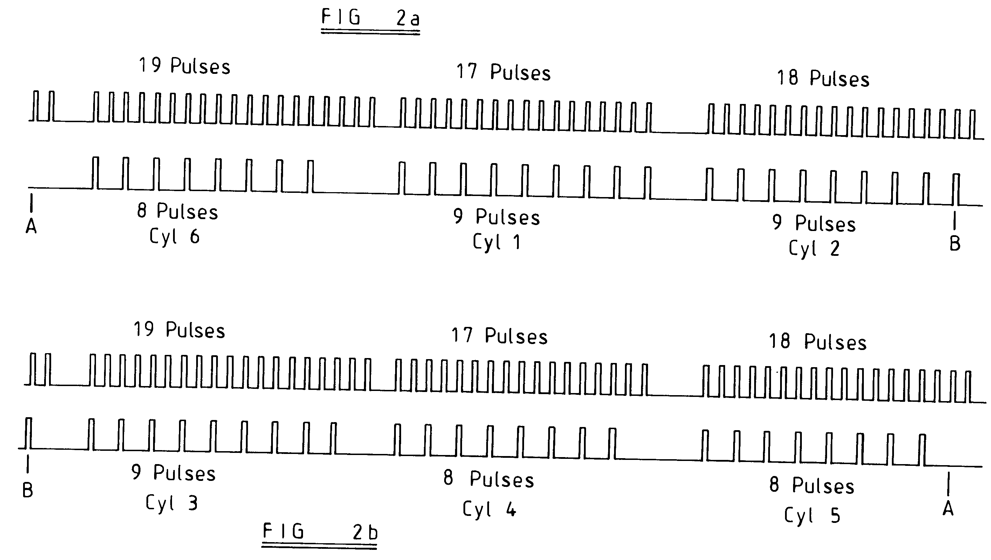

As the engine rotates, the signals from the sensor may be as shown in Figures 2a and 2b. The number of pulses from each sensor and the cylinder associated with those pulses are shown for an engine running at a constant speed. Position B at the end of Figure 2a coincides with position B at the start of Figure 2b. Similarly position A at the end of Figure 2b coincides with position A at the start of Figure 2a. Thus the graphs show two half cycles of a full engine cycle. The pulse trains derived with respect to each cylinder uniquely identify that cylinder, i.e for each cylinder the teeth counted from the crankshaft and camshaft sensors, respectively, are:
- Cylinder 1: 17 : 9
- Cylinder 2: 18 : 9
- Cylinder 3: 19 : 9
- Cylinder 4: 17 : 8
- Cylinder 5: 18 : 8
- Cylinder 6: 19 : 8

Thus with both sensors 4 and 14 working, the engine position can be determined within one third of a rotation from start-up.

If one of the sensors fails, the engine can still be operated. If, for example, the camshaft sensor fails, then by counting pulses the next cylinder to fire of the engine can be narrowed down to one of two possibilities. The engine management system can then test which possibility is true by attempting to cause an ignition event in one of those cylinders. Thus engine position can still be identified within one third of a revolution and an engine restart can be established within two-thirds of a revolution.

If the crankshaft sensor fails, engine position can be determined, at worst, by counting three sets of pulses and , at best, after only two sets of pulses. Thus, for example, nine pulses followed by nine pulses followed by eight pulses allows the eight pulses to be identified as being associated with cylinder four.

The apparatus also has enhanced noise immunity as signals associated with a cylinder can be cross checked with signals from one or more preceding cylinders. Furthermore the use of constant width teeth means that the apparatus need only accurately locate one side of each tooth and that noise occurring in an inter-tooth interval can be attenuated. Thus the signal to noise performance of the system is enhanced compared to those systems which must measure the length of one or more teeth.

Furthermore positional resolution is substantially constant over all of the toothed portions. This compares favourably with systems using teeth of differing widths since the positional resolution changes with changing tooth width.

The rapid identification of engine position enhances the operation of automatic restart systems which cut the engine while the vehicle is stationary in traffic and which restart the engine as soon as the driver puts his foot on the accelerator. The system is especially suitable for use with Diesel engines since injection always occurs within a few degrees of TDC and the gaps in the toothed wheels can always be positioned away from positions near TDC. The gaps may need to be differently positioned when the engine is a petrol engine since positional information requirements may be different from those of a Diesel engine.

## Claims

1. An engine position determining apparatus for use in determining the position of a multi-cylinder internal combustion engine within a firing cycle of the engine, comprising:
a crankshaft indicator (2) divided into portions, each portion carrying a plurality of crankshaft markers arranged to pass a crankshaft position sensor (4) in a predetermined relationship with respect to cylinder firing events of at least one respective cylinder; and
a camshaft indicator (12) divided into portions, each portion carrying a plurality of camshaft markers arranged to pass a camshaft position sensor (14) in a predetermined relationship with respect to a cylinder firing event of a respective one of the cylinders;
characterized in that: the crankshaft markers are substantially uniform in size; the camshaft markers are substantially uniform in size; and the number of crankshaft and camshaft markers within at least two of the portions of the crankshaft indicator (2) and at least two of the portions of the camshaft indicator (12) is different such that there are at least three combinations of crankshaft and camshaft markers during a complete engine fire cycle.

2. An apparatus as claimed in Claim 1, characterized in that each crankshaft portion carries a different number of crankshaft markers.

3. An apparatus as claimed in Claim 1 or 2, characterized in that each crankshaft portion is separated from its neighbouring portions by at least one missing marker.

4. An apparatus as claimed in any one of the preceding claims, characterized in that the crankshaft indicator (2) is divided into N/2 crankshaft portions, where N is an even integer equal to the number of cylinders of the engine.

5. An apparatus as claimed in any one of the preceding claims, characterized in that the markers of each portion of the crankshaft indicator (2) and the camshaft indicator (12) are substantially equi-angularly spaced.

6. An apparatus as claimed in Claim 5, characterized in that the angular spacings between the markers of the portions of the crankshaft indicator are substantially equal and the angular spacings between the markers of the portions of the camshaft indicator are substantially equal.

7. An apparatus as claimed in any one of the preceding claims, characterized in that the crankshaft and camshaft indicators (2, 12) are toothed wheels.

8. An apparatus as claimed in any one of the preceding claims, characterized in that each camshaft portion is separated from its neighbouring portions by at least one missing marker.

9. An apparatus as claimed in Claim 4, characterized in that the camshaft indicator (12) is divided into N camshaft portions.

10. An apparatus as claimed in any one of the preceding claims, characterized in that the portions of the camshaft indicator (12) belong to either a first group of substantially identical portions or a second group of substantially identical portions, the portions of the first group being different from the portions of the second other group.

11. An apparatus as claimed in any one of the preceding claims, characterized by a processing means (10) responsive to outputs of the sensors for determining the position of the engine within its firing cycle.

12. An apparatus as claimed in Claim 11, characterized in that the processing means (10) is arranged to estimate the engine position from data provided by only one of the crankshaft and camshaft position (4, 14) sensors in the absence of data from the other of the crankshaft and camshaft sensors (4, 14).

13. An apparatus for determining the position within an engine cycle of an internal combustion engine, comprising: a crankshaft indicator (2) having a plurality of marker locations and a plurality of markers disposed at respective ones of the marker locations; a crankshaft sensor (4) for detecting passage of each of the markers of the crankshaft indicator (2) past the crankshaft sensor (4); a camshaft indicator (12) having a plurality of marker locations and a plurality of markers disposed at respective ones of the marker locations; and a camshaft sensor (14) for detecting passage of each of the markers of the camshaft indicator (12) past the camshaft sensor (14), characterised in that the marker locations of each of the crankshaft indicator (2) and the camshaft indicator (12) are equi-angularly spaced, the markers of each of the crankshaft indicator (2) and the camshaft indicator (12) comprise first and second groups wherein the number of markers of the first group is different from the number of markers of the second group, and each of the first and second groups of markers are separated from each adjacent marker by at least one marker location without a marker.
